# EUROPEAN PATENT APPLICATION

(11) **EP 4 488 341 A1**
(43) Date of publication of application: **08.01.2025**
(21) Application number: 24185071.8
(22) Date of filing: 27.06.2024
(51) Int. Cl.: C09D 11/101, C09D 11/34, C09D 11/12, C09D 11/38

(54) **RADIATION-CURABLE INK COMPOSITION, METHOD FOR PREPARING THE SAME AND METHOD FOR APPLYING AN IMAGE ONTO A RECORDING MEDIUM**

(30) Priority: 05.07.2023 EP 23183746
(71) Applicant: Canon Production Printing Holding B.V., 5914 HH Venlo (NL)
(72) Inventor: PENG, Ke, 5914 HH Venlo (NL); WILLEMSE, Robin X.E., 5914 HH Venlo (NL)
(74) Representative: Canon Production Printing IP Department

(57) **Abstract**

The present invention relates to a radiation-curable ink composition. The present invention further relates to a method for preparing a radiation-curable ink composition. In addition, the present invention relates to a method for applying an image onto a recording medium.

## Description

The present invention relates to a radiation-curable ink composition. The present invention further relates to a method for preparing a radiation-curable ink composition. In addition, the present invention relates to a method for applying an image onto a recording medium.

### Background of the invention

Radiation-curable ink compositions are known in the art. These ink compositions comprise one or more radiation curable components. A special class of radiation curable ink compositions are radiation curable gel ink compositions. These inks are fluid at elevated temperature and become solid -even if not yet cured- at lower temperatures. These inks are typically jetted at elevated temperatures. Gel inks may become solid or semi-solid upon cooling down on a recording medium, e.g. a sheet of paper. As a result, spread of a droplet of ink on the recording medium may be decreased and color bleeding may be prevented.

Radiation curable gel ink compositions typically comprise a gelling agent. The gelling agent provides the ink composition with gelling property. The gelling process is a complex process. The gelling process may influence the microstructure of the ink layer, which may influence the appearance of the ink layer. For example, the gloss level of the ink layer may be influenced by the gelling process. Suitably controlling the gelling process is difficult, especially in cases wherein the temperature of the recording medium during the printing process is not controlled. The temperature of the recording medium may change and consequently, the gloss level of prints made may change. This is unwanted.

It is therefore an object of the invention to provide an ink composition that results in prints having a more stable gloss level, also at varying temperature of the recording medium.

It is a further object of the invention to provide a corresponding method for applying an image onto a recording medium.

### Summary of the Invention

The object of the invention is achieved in a radiation-curable ink composition, wherein the radiation-curable ink composition comprises at least one radiation-curable component and a gelling agent, the at least one radiation-curable component being present in an amount of 55 wt% or more, based on the total weight of the radiation-curable ink composition, wherein the radiation-curable ink composition further comprises a polyalkylene wax, wherein the polyalkylene wax has a molecular weight of 1000 g/mole or less.

### Radiation curable component

The radiation curable inkjet ink composition may comprise at least one radiation curable component. A radiation-curable component is a component that may react (e.g. polymerize) under influence of suitable radiation, such as electromagnetic radiation, e.g. ultraviolet (UV) radiation. The at least one radiation-curable component may comprise radiation-curable monomers and/or radiation-curable oligomers.

The monomers and oligomers may be monofunctional (i.e. one polymerizable group per molecule), difunctional (i.e. two polymerizable groups per molecule), trifunctional (i.e. three polymerizable groups per molecule), tetrafunctional ( i.e. four polymerizable groups per molecule), or multifunctional (i.e. five or more polymerizable groups per molecule).

Examples of radiation-curable monomers are (meth)acrylates, epoxides, vinyls, vinylethers, vinyl esters, vinylether acrylates, allyl ethers, allyl esters, acrylamides, methacrylamides, styrenes, maleates, fumarates and itaconates.

Examples of radiation-curable oligomers include urethane acrylate oligomers, polyester oligomers, amine functionalized oligomers, polyether oligomers, polyamide oligomers, acrylate oligomers and epoxy based materials such as bisphenol A epoxy acrylates and epoxy acrylates.

Preferably, the one or more radiation-curable components may comprise one or more acrylates. Preferably, the one or more radiation-curable components may comprise a monofunctional components and a non-monofunctional component, such as a difunctional, trifunctional, tetrafunctional and polyfunctional component.

Further, the radiation-curable matrix may comprise at least one amine acrylate. Amine acrylates are also known as acrylated amines. Amine acrylates may improve the surface curing of the ink layer upon exposure to radiation, such as UV radiation.

The ink composition may comprise one type of radiation curable compound or alternatively, the radiation curable medium may comprise a mixture of radiation curable compounds.

The at least one radiation-curable component may be present in an amount of at least 55 wt%, based on the total weight of the radiation-curable ink composition. Preferably, the at least one radiation-curable component may be present in an amount of at least 60 wt%, based on the total weight of the radiation-curable ink composition, such as an amount of at least 65 wt%, based on the total weight of the radiation-curable ink composition, for example an amount of at least 70 wt%, based on the total weight of the radiation-curable ink composition.

Preferably, the at least one radiation-curable component may be present in an amount of 95 wt% or less, based on the total weight of the radiation-curable ink composition. More preferably, the at least one radiation-curable component may be present in an amount of 90 wt% or less, based on the total weight of the radiation-curable ink composition.

In case the radiation-curable ink composition comprises only one radiation-curable component, the radiation-curable component may be present in an amount of at least 55 wt%, based on the total weight of the radiation-curable ink composition. In case the radiation-curable ink composition comprises a plurality of radiation-curable components, the total amount of the plurality of radiation-curable components may be at least 55 wt%, based on the total weight of the radiation-curable ink composition.

In case the radiation-curable ink composition comprises less than 55wt% of the at least one radiation-curable component, the robustness of the image formed after printing and curing may be insufficient.

### Gelling agent

The ink further comprises a gelling agent. Gelling agents are also known in the art as gellants or thickeners. The presence of a gelling agent can cause a viscosity increase in the inkjet ink composition upon cooling of the ink composition. The viscosity increase in the ink composition should be sufficient, to adequately control droplet spreading. Examples of gellants used in gelling radiation curable inkjet ink compositions are waxes, such as paraffin wax, microcrystalline wax, polyethylene waxes, polypropylene waxes, and natural waxes, such as animal-based waxes or plant-based waxes, fatty acids, fatty alcohols, ketones, fatty acid esters and fatty acid amides. Because gelling inks have reduced spread of ink on the recording medium, due to their gelling property, it may not be necessary to cure the ink droplets immediately after applying them onto the recording medium. It is possible to keep the droplets in an uncured state on the recording medium, without color bleeding occurring.

### Polyalkylene wax

Polylakylene waxes are a class of waxes based on alkylene polymers or alkylene copolymers. Examples of alkylene polymers are polyethylene and polypropylene. Ethylene-propylene copolymers are an example of alkylene copolymers. The polywax according to the present invention has a molecular weight of 1000 g/mole or less. The molecular weight of the polyalkylene wax may be the number average molecular weight (Mₙ) of the polyalkylene wax.

Commercially available examples of polyalkylene waxes having a molecular weight of 1000 g/mole or less include, but are not limited to Polywax ^{(R)}1000, Polywax ^{(R)}850, Polywax ^{(R)}725, Polywax ^{(R)} 655 , Polywax ^{(R)} 600, Polywax ^{(R)}500 and Polywax ^{(R)}400.

It was surprisingly found that an ink composition comprising a gelling agent as well as a polyalkylene wax having a molecular weight of 1000 g/mole or less, results in prints having a higher gloss level.

In an embodiment, the polyalkylene wax is a linear poly-alkylene wax.

In an embodiment, the polyalkylene wax is a polyethylene wax.

In a further embodiment, the polyalkylene wax is a linear polyethylene wax.

### Colorant

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color. The colorant may be a cyan, magenta, black, yellow, brown orange, green, blue, red, purple or white colorant.

### Further ink Components

The radiation curable medium may optionally comprise at least one inhibitor. An inhibitor is a component that prevent (inhibits) unwanted polymerization of the radiation curable compound. Inhibitors may be added to the radiation curable inkjet ink composition to increase the shelf life on the ink composition.

The radiation curable medium may optionally comprise at least one photo initiator. A photo initiator is a component that improves the efficiency of curing; i.e. increases the polymerization rate when the ink composition is irradiated with suitable radiation, such as UV radiation.

The radiation curable medium may optionally comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and anti-fungi components.

In an embodiment, the gelling agent is a fatty acid ester. Fatty acids are suitable for forming esters, when reacted with a compound comprising an hydroxyl functional group. The fatty acids may be saturated or non-saturated fatty acids. Non-saturated fatty acids may be monounsaturated fatty acids or polyunsaturated fatty acids. Non-saturated fatty acids comprise an alkene functional group. Upon curing of the ink, the alkene functional group may react and the ester compound may be incorporated in the network formed by the radiation-curable component. Preferably, the fatty acid is a saturated fatty acid. When the compound B is a fatty acid, no so-called blooming of the ink may occur. Blooming is an unwanted phenomena that may occur in ink composition, such as radiation-curable ink composition comprising a gelling agent. After being applied onto a recording medium, a gelling agent present in the ink may cool down and may solidify, thereby forming a three-dimensional network that increases the viscosity of the ink. However, in the course of time, the gelling agent may migrate to the surface of the ink layer, which may result in matt print appearance. The phenomenon of decreased gloss due to migration of the gelling agent is known as "blooming". Without wanting to be bound to any theory, it is believed that by selecting compound B to be a fatty acid, an ester compound is obtained, that results in an ink composition that does not show blooming.

Preferably, the gellant is an ester obtainable by a condensation reaction between a fatty acid and a component selected from the group consisting of pentaerythritol, cyclodextrine, glycerol, dipentaerythritol, 2-(hydroxymethyl)-2-methylpropane-1,3-diol, 2-ethyl-2-(hydroxymethyl)propane-1,3-diol, 2-(hydroxymethyl)propane-1,3-diol, trimethylolethane, trimethylolpropane, trimethylolbutane and trimethylolpentane.

In a further embodiment, the gelling agent is a fatty acid ester of pentaerythritol. Fatty acid esters of pentaerythritol may be suitably used as gelling agent for a radiation-curable ink composition. Examples of fatty acid esters of pentaerythritol include pentaerythritoltetralaurate, pentaerythritoltetramyristate, pentaerythritoltetrapalmitate, pentaerythritoltetrastearate, pentaerythritoltetra-arachidate, pentaerythritoltetrabehenate, pentaerythritoltetralignocerate and pentaerythritoltetracerotate.

In an embodiment, wherein the gelling agent is present in an amount of from 0.1 wt% to 15 wt% based on the total weight of the radiation-curable ink composition.

Preferably, the gelling agent may be present in an amount of from 0.2 wt% to 10 wt% based on the total weight of the ink composition, more preferably from 0.4 wt% to 5 wt% based on the total weight of the ink composition.

In case the amount of gellant is less than 0.1 wt%, based on the total weight of the radiation-curable ink composition, then the radiation-curable ink composition may not undergo a phase change upon application onto a recording medium. In case the amount of gellant is more than 15 wt%, based on the total weight of the radiation-curable ink composition, then the radiation-curable ink composition may be difficult to jet using an inkjet print head

In an embodiment, the polyalkylene wax is present in an amount of from 0.01 wt% to 5 wt% based on the total amount of the radiation-curable ink composition. Preferably, the polyalkylene wax is present in an amount of from 0. 1 wt% to 2 wt% based on the total amount of the radiation-curable ink composition.

In an aspect of the invention, a method for preparing a radiation-curable ink composition is provided, the method comprising the steps of:
- providing at least one radiation curable component, the at least one radiation-curable component being present in an amount of 55 wt% or more, based on the total weight of the radiation-curable ink composition;
- providing a gelling agent;
- providing a polyalkylene wax, the polyalkylene wax having a molecular weight of 1000 g/mole or less;
- mixing the radiation curable component, the gelling agent and the polyalkylene wax.

The method may result in the preparation of the radiation-curable ink composition according to the present invention.

In a further aspect of the invention, a method for applying an image onto a recording medium is provided, the method comprising the steps of:
a. jetting droplets of a radiation-curable ink composition according to the present invention onto the recording medium;
b. curing the radiation-curable ink composition by irradiating the ink composition using UV radiation.

In the method, in step a), an image is applied to the recording medium. The image may be applied using an ink composition according to the present invention. The ink composition may be applied onto the recording medium in a predetermined fashion, e.g. in accordance with image files stored on suitable storing means. The image may be applied for example by jetting droplets of the radiation-curable inkjet ink composition using an inkjet print head. The recording medium may be a sheet-like medium, such as a sheet of paper or a sheet of vinyl. Alternatively, the recording medium may be a web, for example an endless belt. The web may be made of a suitable material. Optionally, the image may be dried after it has been applied onto the intermediate transfer member. In the method, in step b), the radiation-curable inkjet ink composition is cured by irradiating the ink composition using UV radiation. The inkjet ink composition may be irradiated using a suitable source of radiation, such as a halogen lamp, a mercury lamp and/or a LED lamp. Optionally, a plurality of sources of radiation may be used to irradiate the inkjet ink composition.

In an embodiment, a time interval between jetting droplets of the radiation-curable ink composition and curing the radiation-curable ink composition is at least 30 seconds. The time interval between applying the radiation-curable ink and curing the radiation-curable ink may be at least 30 seconds, preferably at least 60 seconds. In case the time interval between applying the radiation-curable gel ink and curing the radiation-curable gel ink is less than 30 seconds, an image may be formed comprising a plurality of layers, without intermediate curing of the ink. In case the time interval between applying the ink and curing the ink is at least 30 seconds, the ink may spread sufficiently, resulting in good image quality.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic perspective view of a first example of a printing system according to the present invention in a first printing mode;
Fig. 2 is a schematic perspective view of a second example of a printing system according to the present invention in a second printing mode;
Fig. 3 is a schematic perspective view of a third example of a printing system according to the present invention in a third printing mode;
Fig. 4 is a schematic diagram of a control unit of a reprographic system according to Fig. 1, 2 or 3;

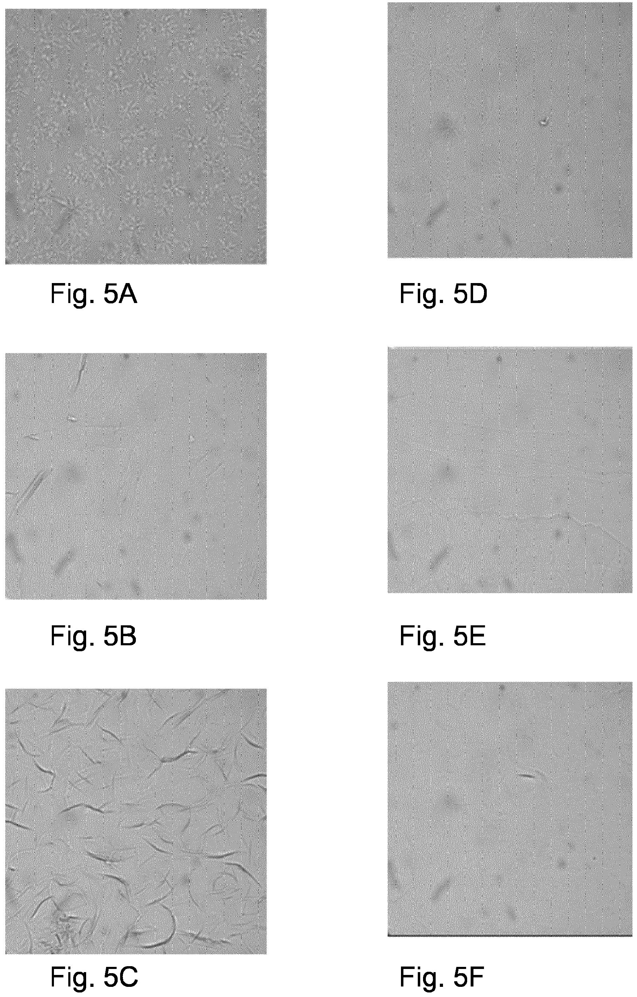

Fig 5A-5F show pictures of the comparison experiments.

In the drawings, same reference numerals refer to same elements.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

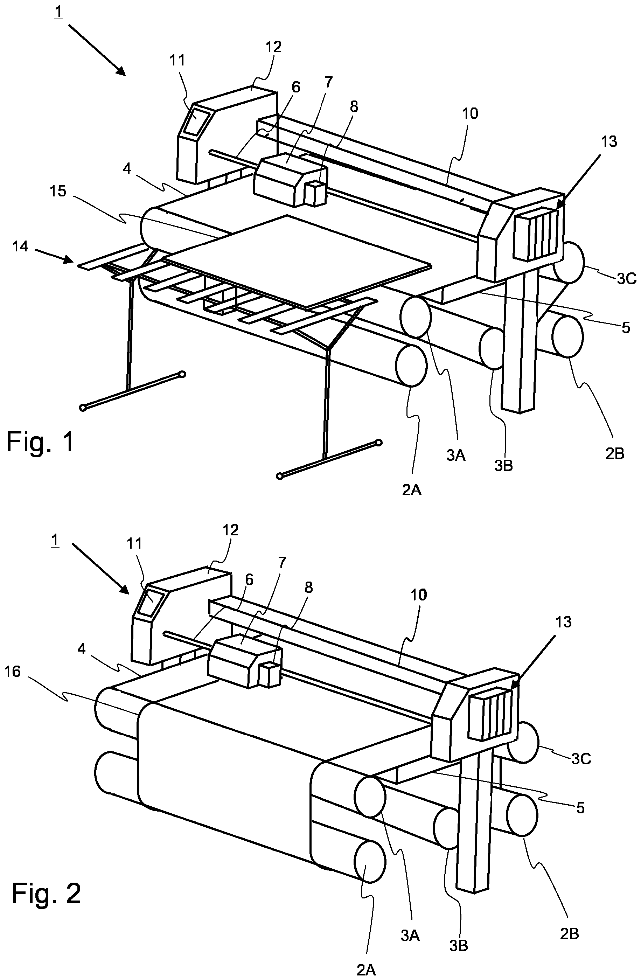

Fig. 1 shows a printing apparatus. A printing apparatus is also known as printer. The printing apparatus 1 comprises an scanning printing unit 7 for printing on a recording medium 15. The recording medium 15 in Fig. 1 is a relatively rigid substrate, such as a panel. The recording medium 15 is supplied from a media input unit 14, which may be configured for storing a plurality of such print media 15 and supplying these to the printer 1. The printer 1 comprises a medium support 4. Printer 1 may further comprise transport means for receiving and transporting the recording medium 15 along the scanning printing unit 7. In Fig. 1, the medium support is embodied as an endless belt 4. The endless belt is an endless transport belt 4 supported on a plurality of support rollers 3A, 3B, 3C. At least one of the support rollers 3A, 3B, 3C is provided with driving means for moving the belt 4. The belt 4 is therefore configured to support and transport the recording medium. Additionally, one or more one of the support rollers 3A, 3B, 3C may be configured to be moved and/or tilted to adjust and control the lateral position of the belt 4. The scanning printing unit 7 may be provided with a sensor 8, such as a CCD camera, to determine the relative position of belt 4 and/or the recording medium 15. Data from said sensor 8 may be applied to control the position of the belt 4 and/or the recording medium 15. The belt 4 is further provided with through-holes and a suction box 5 in connection with a suction source (not shown), such that an underpressure may be applied to the recording medium 15 via the through-holes in the belt 4. The underpressure adheres the recording medium 15 flatly to the belt 4 and prevents displacement of the recording medium 15 with respect to the belt 4. Due to this holding the belt 4 is able to transport the recording medium 15. It will be appreciated that other suitable transport means, such as rollers, steppers, etc, may alternatively be applied. The recording medium 15 may be transported stepwise and/or in continuous movement. The scanning printing unit 7 is configured to translate along a first guide beam 6 in a scanning direction. The scanning direction is perpendicular to the direction in which the print medium is transported by the belt 4. The scanning printing unit 7 holds a plurality of print heads (not shown), which are configured to jet a plurality of different marking materials (different colors of ink, primers, coatings, etc.) on the recording medium 15. Each marking material for use in the scanning printing unit 7 is stored in one of a plurality of containers arranged in fluid connection with the respective print heads for supplying marking material to said print heads to print an image on the recording medium 15.

The application of the marking material, such as the radiation-curable ink from the printing units is performed in accordance with data provided in the respective print job. The printing unit may comprise one or more inkjet print heads. The timing by which the droplets of marking material are released from the one or more print heads determines their position on the recording medium 15. The timing may be adjusted based on the position of the scanning printing unit 7 along the first guide beam 6. The above mentioned sensor 8 may therein be applied to determine the relative position and/or velocity of the scanning printing unit 7 with respect to the recording medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the recording medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit is provided downstream of the scanning printing unit 7. The fixation unit may emit radiation to facilitate the marking material fixation process. In the example of Fig. 1, the fixation unit is page-wide curing array 10. The page-wide curing array 10 extends in the main scanning direction. The page-wide curing array does not move in operation in the main scanning direction. The page-wide array may move in the direction of medium transport, which is a direction perpendicular to the scanning direction. In an alternative embodiment (not shown), the fixation unit may be a scanning fixation unit, that in operation moves in reciprocation in the scanning direction. The page-wide curing array 10 is configured to in operation emit radiation of certain frequencies, which interacts with the marking materials, for example UV light in case of UV-curable inks. Optionally (not shown), the scanning printing unit 7 may be provided with a further fixation unit on the same carriage which holds the print heads. This further fixation unit can be used to (partially) cure and/or harden the marking materials, independent of or interaction with the page-wide curing array 10.

After printing and fixation, the recording medium 15 is transported to a receiving unit (not shown). The receiving unit may comprise a take-up roller for winding up the recording medium 15, a receiving tray for supporting sheets of recording medium 15, or a rigid media handler, similar to the media input unit 14. Optionally, the receiving unit may comprise processing means for processing the medium 8, 9 after printing, e.g. a post-treatment device such as a coater, a folder, a cutter, or a puncher.

Printing apparatus 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touch-screen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the recording medium 15. Such rigid print media 15 may be panels, for example panels for doors or walls, corrugated media, plates formed of plastic or metal, etc. To handle these rigid print media 15, the printer 1 in Fig. 1 is configured with a substantially linear transport path: from the media input device 14, the recording medium 15 moves forward along the scanning printing unit 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

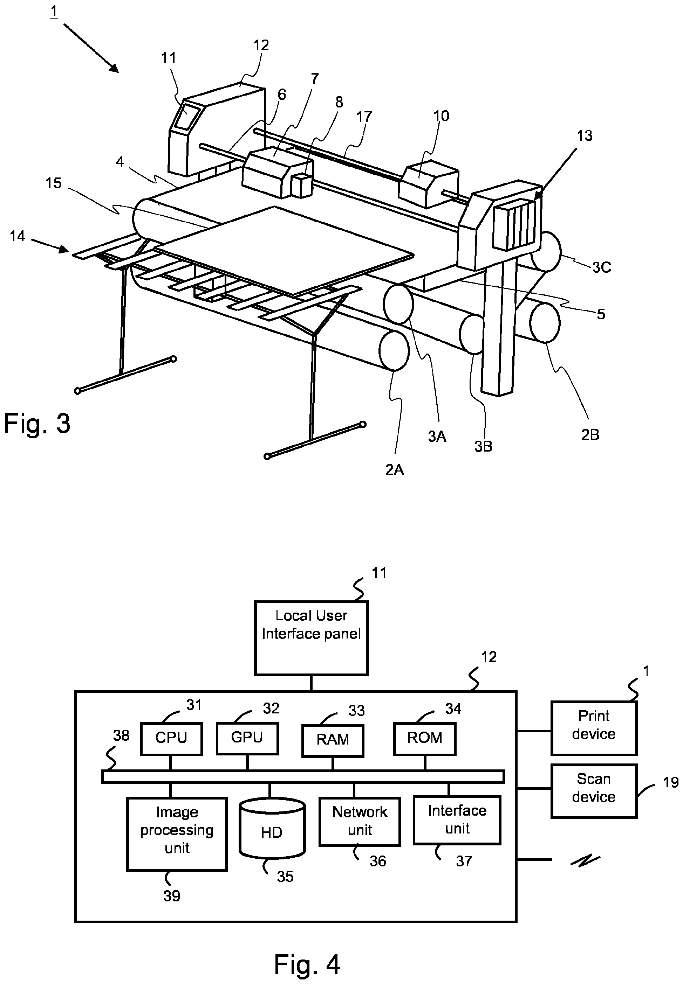

Figure 3 shows a printer similar to the printer shown in Fig. 1. The printer shown in Fig. 3 comprises a scanning curing unit 10. The scanning curing unit 10 is configured to move in reciprocation in the scanning direction along guide rail 17. The scanning curing unit 10 comprises at least one radiation emitting unit (not shown).

### Control

An embodiment of the control unit 12 is in more detail presented in Fig. 4. As shown in Fig. 4, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 5. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client devices, such as scan device 19 and to the printing system 1. The network unit 36 connects the control unit 12 to the network N and is designed to provide communication with the workstations (not shown) and with other devices 19 reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

### Experiments and examples

### Materials

SR 355, SR 531 and CN991 were obtained from Sartomer. BYK 333 was obtained from BYK. Phenothiazine, 1-docosanol and stearone were obtained from Sigma Aldrich. Pentaerythritoltetrastearate was obtained from NOF and polywax 500 was obtained from NuCera. All materials were used as obtained, unless stated otherwise.

### Methods

### Printing

Print samples were prepared by applying ink onto a glass plate using a pipette. The plate provided with the ink was heated to 80°C and subsequently cooled down to room temperature. The print samples were put under a Olympus Light Microscope equipped with QICAM Fast 1394 camera. Pictures were taken; the magnification of all pictures are at 50×.

### Ink examples

Ink examples 1, 2 and 3 (**Ex 1, Ex 2** and **Ex 3**) were prepared by providing the ingredients listed in table 1 below and mixing the ingredients.

**Table 1: Ink examples 1-3**

| Component | **Ex 1** | **Ex 2** | **Ex 3** |
|---|---|---|---|
| SR 355 | 1.58 gr | 1.58 gr | 1.58 gr |
| SR 531 | 69.15 gr | 69.15 gr | 69.15 gr |
| CN991 | 27.08 gr | 27.08 gr | 27.08 gr |
| BYK 333 | 0.53 gr | 0.53 gr | 0.53 gr |
| phenothiazine | 0.08 gr | 0.08 gr | 0.08 gr |
| pentaerythritoltetrastearate | 1.40 gr | 0 | 0 |
| 1-docosanol | 0 | 1.40 gr | 0 |
| stearone | 0 | 0 | 1.40 gr |
| polywax 500 | 0.20 gr | 0.20 gr | 0.20 gr |

Ink examples 1-3 each comprise a gelling agent and polyalkylene wax. Hence, ink examples 1-3 are examples according to the present invention.

### Comparative ink examples

Comparative ink examples 1, 2 and 3 (**CE 1, CE 2** and **CE 3**): Comparative ink example 1 was prepared by providing the ingredients listed in table 2 below and mixing the ingredients.

**Table 2: Comparative ink example 1-3**

| Component | **CE 1** | **CE 2** | **CE 3** |
|---|---|---|---|
| SR 355 | 1.59 gr | 1.59 gr | 1.59 gr |
| SR 531 | 69.29 gr | 69.29 gr | 69.29 gr |
| CN991 | 27.13 gr | 27.13 gr | 27.13 gr |
| BYK 333 | 0.53 gr | 0.53 gr | 0.53 gr |
| phenothiazine | 0.08 gr | 0.08 gr | 0.08 gr |
| pentaerythritoltetrastearate | 1.40 gr | 0 | 0 |
| 1-docosanol | 0 | 1.40 gr | 0 |
| stearone | 0 | 0 | 1.40 gr |

Comparative ink examples 1-3 each comprise a gelling agent, but do not comprise a polyalkylene wax. Hence, comparative ink examples 1-3 are not examples according to the present invention.

### Comparison Experiments

Printing examples P1-P6 were prepared using the ink examples and comparative ink examples.

The experiments and results are summarized in table 3.

**Table 3: Comparison experiments**

| Print example | **Ink** | **Fig** | **Crystal** |
|---|---|---|---|
| P1 | **Ex 1** | 5A | Smaller crystals |
| P2 | **Ex 2** | 5B | Smaller crystals |
| P3 | **Ex 3** | 5C | Smaller crystals |
| P4 | **CE 1** | 5D | Larger crystals |
| P5 | **CE 2** | 5E | Larger crystals |
| P6 | **CE 3** | 5F | Larger crystals |

Analysis of the print examples showed that the print samples made with ink according to the present invention (**Ex 1- Ex 3**) form smaller crystals compared to samples made with ink not according to the present invention (**CE 1- CE 3**). Ink layers with smaller crystals generally show a high gloss, whereas ink layers with larger crystals generally show a lower gloss.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Radiation-curable ink composition, wherein the radiation-curable ink composition comprises at least one radiation-curable component and a gelling agent, the at least one radiation-curable component being present in an amount of 55 wt% or more, based on the total weight of the radiation-curable ink composition, wherein the radiation-curable ink composition further comprises a polyalkylene wax, wherein the polyalkylene wax has a molecular weight of 1000 g/mole or less.

2. Radiation-curable ink composition according to claim 1, wherein the gelling agent is a fatty acid ester.

3. Radiation-curable ink composition according to claim 2, wherein the gelling agent is a fatty acid ester of pentaerythritol.

4. Radiation-curable ink composition according to any of the preceding claims, wherein the gelling agent is present in an amount of from 0.1 wt% to 15 wt% based on the total amount of the radiation-curable ink composition.

5. Radiation-curable ink composition according to any of the preceding claims, wherein the polyalkylene wax is present in an amount of from 0.01 wt% to 5 wt% based on the total amount of the radiation-curable ink composition.

6. Method for preparing a radiation-curable ink composition according to claim 1 - 5, the method comprising the steps of:
• providing at least one radiation curable component, the at least one radiation-curable component being present in an amount of 55 wt% or more, based on the total weight of the radiation-curable ink composition;
• providing a gelling agent;
• providing a polyalkylene wax, the polyalkylene wax having a molecular weight of 1000 g/mole or less;
• mixing the radiation curable component, the gelling agent and the polyalkylene wax.

7. Method for applying an image onto a recording medium, the method comprising the steps of :
a. jetting droplets of a radiation-curable ink composition according to any of claims 1- 5 onto the recording medium;
b. curing the radiation-curable ink composition by irradiating the ink composition using UV radiation.

8. Method according to claim 7, wherein a time interval between jetting droplets of the radiation-curable ink composition and curing the radiation-curable ink composition is at least 30 seconds.
